(19) Europäisches Patentamt
European Patent Office
Office européen des brevets

(11) **EP 2 715 315 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **12724901.9**

(22) Anmeldetag: **23.05.2012**

(51) Int Cl.:
*G01N 21/03* (2006.01)

(86) Internationale Anmeldenummer:
**PCT/EP2012/002175**

(87) Internationale Veröffentlichungsnummer:
**WO 2012/159741 (29.11.2012 Gazette 2012/48)**

(54) **SENSORBAUTEIL FÜR EINEN OPTISCHEN DURCHFUSSSENSOR**

SENSOR COMPONENT FOR AN OPTICAL FLOW RATE SENSOR

COMPOSANT CAPTEUR POUR CAPTEUR OPTIQUE DE DÉBIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2011 DE 102011102430**

(43) Veröffentlichungstag der Anmeldung:
**09.04.2014 Patentblatt 2014/15**

(73) Patentinhaber: **Schott AG**
**55122 Mainz (DE)**

(72) Erfinder:
• **RANFTL, Reinhard**
**84076 Pfeffenhausen (DE)**
• **HARTL, Helmut**
**A-1210 Wien (AT)**

(74) Vertreter: **Sawodny, Michael-Wolfgang**
**Dreiköniggasse 10**
**89073 Ulm (DE)**

(56) Entgegenhaltungen:
| DE-A1- 10 355 425 | US-A- 3 555 450 |
| US-A- 3 800 147 | US-A- 5 046 854 |
| US-A- 5 151 474 | US-B1- 6 731 385 |

EP 2 715 315 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sensorbauteil für einen optischen Durchflusssensor, insbesondere für fluide und/oder gasförmige Medien, umfassend wenigstens einen Bauteilabschnitt und wenigstens einen Sensorabschnitt, wobei der Sensorabschnitt wenigstens eine oder mehrerer Aussparungen umfasst, in denen wenigstens ein Sichtglas angeordnet ist.

Aus der DE 10 2008 058 071A1 ist ein Sensorbauteil in Form eines Durchflusssensors bekannt geworden, bei dem die physikalischen Eigenschaften eines Mediums, beispielsweise einer Flüssigkeit oder eines Gases bestimmt werden. Das Medium, dessen physikalische Eigenschaften, beispielsweise die Temperatur, sensiert werden soll, wird beispielsweise in einem Leitungssystem geführt oder in einem Behälter, wie beispielsweise einem Tank aufbewahrt. Der in der DE 10 2008 058 071A1 beschriebene Sensor umfasst lediglich mechanische und elektrische Sensoren wie Feuchte-Sensoren, Drucksensoren, Kapazitätssensoren, Sensoren zur Messung der elektrischen Leitfähigkeit sowie Temperatursensoren. Optische Sensoren wurden bislang für eine Bestimmung der physikalischen Eigenschaften bei einer Anwendung gemäß der DE 10 2008 058 071A1 nicht eingesetzt. Nachteilig an den Kapazitätssensoren, war, dass nur ein Bestandteil des Mediums, insbesondere der Flüssigkeit, bevorzugt des Treibstoffs, gemessen werden konnte. Eine derartige Komponente des Mediums, die bestimmt werden konnte, war beispielsweise Ethanol.

Aus der DE 10 2007 025 585A1 ist ein Verfahren zum Betreiben eines Verbrennungsmotors und eine Vorrichtung zur Bestimmung eines Betriebsparameter dessen bekannt geworden. Bei dem Verfahren wird zumindest ein Teil des Kraftstoffes für den Verbrennungsmotor mit Licht bestrahlt und eine Intensität des den Kraftstoff durchdringenden oder reflektierten Lichtes bestimmt. Bei der DE 10 2007 025 585A1 ist hierfür in die Treibstoffleitung eine Glasküvette eingelassen, die zwei Quarzglasfenster umfasst. Die Glasküvette bildet dann die Messstelle im Treibstoffstrom bzw. in der Treibstoffleitung. Nachteilig an der Glasküvette als Sensorbauteil für einen optischen Durchflusssensor ist, dass die Glasküvette in die Treibstoffleitung nicht einfach verbaut werden kann. Ein weiterer Nachteil ist, dass die Herstellung aufwändig ist und auch eine Anpassung der Querschnitte an der Glasküvette, insbesondere im Bereich der Quarzglasfenster schwierig ist.

Die US 2005/0286054A1 zeigt ein optisches Sensor-System. Die Überwachung des Sauerstoffgehaltes in Treibstoffinertisierungssystem in einem Flugzeugtank. Hierzu ist ein Messhohlraum mit Glasscheiben aus Saphir- oder Quarzglas versehen. Der Messhohlraum besteht aus einem hochporösen Metallschaum. Der Messhohlraum ist nicht in eine Kraftstoffleitung angebracht, sondern vielmehr in den Tankleerraum. Das aus der US 2005/0286054A1 bekannte Sensor-System ist somit für eine Verwendung in einer Treibstoffleitung als Durchflusssensor nicht geeignet.

Die DE 42 41 098A1 zeigt eine Vorrichtung zur optischen Vermessung einer heißen Abgasströmung, wobei in ein Abgasrohr direkt strahlungsdurchlässige Scheiben eingesetzt sind. Zudem sind in der DE 42 41 098A1 keine Angaben zu den Materialien der Scheiben noch zu dem des Abgasrohres gemacht, auch Angaben wie die Scheiben mit dem Abgasrohr verbunden sind, fehlen. Auch die Vorrichtung der DE 42 41 098 A1 hat den Nachteil, dass eine Anpassung der Querschnitte nur schwer möglich ist.

Die US 6 023 324A zeigt eine Vorrichtung zur Bestimmung des Flusses abrasiver Partikel in einer Abstrahlmaschine. Über den Aufbau des Sensorabschnittes sind in der US 6 023 324A keinerlei Angaben gemacht, es ist lediglich ausgeführt, dass der Sensorabschnitt rohrförmig optisch durchlässig ist.

Aus der EP 0 967 466A1 ist ein Wirbelströmungsaufnehmer beschrieben, mit dem die Strömungsgeschwindigkeit und/oder der Volumendurchfluss eines Fluides gemessen werden kann. Das Messrohr gemäß der EP 0 967 466A1 hat eine Wand, in der zwei Fenster aus einem optischen, schlieren- und blasenfreien hochtemperaturbeständigen Glas fluid- und druckdicht eingebracht sind, wobei das Material des Messrohres nicht angegeben ist. Wie bei allen anderen zuvor beschriebenen Dokumenten ist das Sichtglas direkt in die Wandung des Materials des Messrohres eingeglast mit den dort erwähnten Nachteilen. Ein weiterer Nachteil wie bei allen zuvor genannten Systemen ist. Dies hat den, dass bei einer Einglasung das gesamte Messrohr erwärmt werden muss.

Die Messung von physikalischen Eigenschaften von Medien, insbesondere einer Flüssigkeit oder einem Gas, bevorzugt einem Kraftstoff sind in der US 7,030,629 B1 sowie der US 2007/0056365 A1 beschrieben. Bei sämtlichen dieser Sensoren waren zur Sensierung der physikalischen Eigenschaften kapazitive Messungen erforderlich. Dies hatte den Nachteil, dass, wie zuvor beschrieben. nur eine Komponente eines Mediums bestimmt werden konnte, beispielsweise Ethanol.

US 3,800,147 A stellt den nächstliegenden Stand der Technik dar und zeigt einen Durchflusssensor, umfassend eine rohrförmige Durchflusskammer mit Übergangsstücken von den Bauteilen zu einer zentral angeordneten optischen Messkammer, wobei die kreisförmigen Querschnitte allmählich in einen rechteckigen Querschnitt umgewandelt werden. Die Vorrichtung gemäß US 3,800,147 A umfasst weiterhin eine Vielzahl von Umwandlungsstücken, die durch Löten oder Schweißen in den Öffnungen der flachen Wände des Rohrteils angeordnet sind. Die Umwandlungsstücke umfassen einen ringförmigen Körper mit einem kreisförmigen Querschnitt, der ein Innenfenster und ein Außenfenster aufweist, wobei diese Fenster mittels einer Abstandsanordnung, umfassend einen Ring und O-Ring-Abdichtungen, auseinander und mittels einer Kontermutter zusammengehalten sind.

Des Weiteren umfasst der Durchflusssensor der US 3,800,147 A eine Lichtquelle und einen Photosensor zur Messung von durch die Flüssigkeit transmittierten Lichtes.

Gemäß der US 3,800,147 A werden das Innenfenster und das Außenfenster über einen Ring mittels mechanischem Druck von einer Kontermutter in einem Gewinde in den Umwandlungsstücken fest in Position gehalten, wobei diese Übergangsstücke selbst mittels Löten in Öffnungen des flachen Wandteils fest verbunden sind.

Die US 5,151,474 A und die US 5,046,854 A zeigen vorteilhafte Abdichtungen zwischen Sichtgläsern und einem Metallrohr durch die Verwendung von einer Lötzusammensetzung zwischen diesen beiden Bauteilen.

Gemäß der US 5,151,474 A besteht das Rohr aus einer Kovar-Legierung und das Sichtglas aus Saphir, wobei eine zuverlässige Abdichtung auch unter hohem Druck erzielt wird.

Gemäß der US 5,046,854 A wird ein Saphir-Sichtglas mittels einer Zusammensetzung aus einer Silberlötlegierung mit einem Rohr aus einer Kovar-Legierung verbunden.

Aus der US 3,555,450 A ist eine Lötverbindung des Glases mit einem Aufnahmebauteil bekannt geworden. Die DE 103 55 425 A und die US 6,731,385 B zeigen die Verbindung mittels eines Schneckengehäuses und eines Druckgewindeelements.

Aufgabe der Erfindung ist es somit, ein Sensorbauteil anzugeben, das die Nachteile des Standes der Technik vermeidet. Insbesondere soll das Sensorbauteil auf einfache Art und Weise in eine Leitung, durch die das Medium transportiert wird integriert werden können und eine optische Sensierung, physikalischer Eigenschaften des in der Leitung transportierten Mediums ermöglichen. Insbesondere soll das zu transportierende Medium Treibstoff, wie beispielsweise Benzin, Dieselkraftstoff, Rapsöl, Methylester etc. sein und Druckdichtheit zur Verfügung gestellt werden. Des Weiteren soll das Bauteil einfach herstellbar und an unterschiedliche Medien anpassbar sein.

Erfindungsgemäß wird diese Aufgabe durch ein Sensorbauteil gemäß Anspruch 1 gelöst. Das Sensorbauteil für einen optischen Durchflusssensor für Fluide und/oder gasförmige Medien umfasst einen Bauteilabschnitt und wenigstens einen Sensorabschnitt, der Sensorabschnitt Aussparungen umfasst die Sichtgläser aufnehmen können. Im Sensorabschnitt können ein Sichtglas oder wenigstens zwei Sichtgläser vorgesehen sein.

Sind wenigstens zwei Sichtgläser vorgesehen, so sind diese bevorzugt derart angeordnet, dass ein Lichtdurchtritt durch einen Querschnitt des Sensorabschnittes möglich ist. Dies wird bevorzugt dadurch erreicht, dass die beiden Sichtgläser auf gegenüberliegenden Seiten eingebaut sind. Erfindungsgemäß ist des Weiteren vorgesehen, dass das Sensorbauteil ein in die eine oder mehrere Aussparungen einbringbares Aufnahmebauteil umfasst, wobei das Aufnahmebauteil das Sichtglas mit dem Aufnahmebauteil aufnimmt und das Sichtglas stoffschlüssig verbunden ist.

Die mehrteilige Ausgestaltung des Sensorbauteiles mit einem Aufnahmebauteil, das die Sichtgläser beziehungsweise das Sichtglas aufnimmt, hat eine Vielzahl an Vorteilen.

So ist es zum einen möglich das Sichtglas in das Aufnahmebauteil vor dem Zusammenbau mit dem restlichen Sensorbauteil einzubringen. Hierdurch ist es nicht notwendig, das gesamte Sensorbauteil den für die Einglasung hohen Temperaturen auszusetzen. Ein weiterer Vorteil besteht darin, dass das beziehungsweise die Aufnahmebauteile individuell in die Aussparung des Sensorbauteiles eingebracht werden können. Hierdurch ist es zum Beispiel möglich, dass der Querschnitt, den das fluide Medium im Bereich der Aufnahmebauteile mit Sichtfenster durchströmt individuell an das zu sensierende fluide Medium, die optischen Komponenten wie Lichtquelle oder die Glasmaterialien angepasst werden können. Bei den optischen Komponenten ist insbesondere eine Anpassung an die Wellenlänge des abgestrahlten Lichtes der Lichtquelle möglich, bei den Glasmaterialien an deren optische Eigenschaften, wie Transparenz oder Reflektivität.

Ein weiterer Vorteil der mehrteiligen Ausgestaltung ist die Möglichkeit, die Materialauswahl abgestimmt auf die jeweilige Prozessführung zu treffen.

Des Weiteren eröffnet die mehrteilige Ausgestaltung die Möglichkeit der spanlosen Herstellung des Sensorbauteiles hauptsächlich durch Umformen. Die Aussparungen können in das Sensorbauteil durch Stanzen oder Bohren eingebracht werden.

In einer ersten Ausgestaltung der Erfindung ist das in die eine oder mehrere Aussparungen einbringbare Aufnahmebauteil, insbesondere als Kappe, bevorzugt als Edelstahlkappe oder aus Kovar oder Stahl ausgebildet. Wie zuvor beschrieben, kann das Sichtglas in das Aufnahmebauteil eingebracht werden, bevor das Aufnahmebauteil in die Aussparung des Sensorabschnittes eingesetzt wird. Dies hat den Vorteil, dass beim Einbringen des Sichtglases nur das Aufnahmebauteil, insbesondere die Kappe und nicht der ganze Sensorabschnitt, bearbeitet oder erwärmt werden muss. Zunächst wird das Glasmaterial in die Ausnehmung der Kappe eingebracht beziehungsweise eingelegt. Prinzipiell sind dann mehrere Möglichkeiten des Verbindens des Sichtglases mit dem Aufnahmebauteil denkbar.

In einer ersten Ausgestaltung wird das Sichtglas mit dem Aufnahmebauteil durch ein Lotmaterial, beispielsweise ein Metalllot oder ein Glaslot verbunden.

Bei einer Verbindung von Sichtglas und Aufnahmebauteil mit einem Metalllot oder Glaslot ist der Ausdehnungskoeffizient des Sichtglasmaterials und des Materials des Aufnahmebauteils annähernd gleich, d.h. es handelt sich um eine sogenannte angepasste Einglasung, die nicht Gegenstand der Erfindung ist, bei der das Glasmaterial ein im Ausdehnungskoeffizient auf das Material des Aufnahmebauteils abgestimmtes Glas ist. Annähernd gleicher Ausdehnungskoeffizient bei einer angepassten Durchführung bedeutet, das die Ausdehnungskoeffizienten weniger als 20%, insbesondere weniger als 10% voneinander abweichen.

Bei einer angepassten Durchführung werden Spannungsrisse aufgrund unterschiedlicher Ausdehnungen bei Temperaturänderung sicher vermieden.

Wird das Sichtglas in eine im Wesentlichen kreisförmige Ausnehmung mit einem Innendurchmesser ID eines kreisförmigen Aufnahmebauteils mit Außendurchmesser AD eingebracht, so gilt für das Aufnahmebauteil, bei dem das Sichtglas eingelötet wird, AD < 1,2 ID,insbesondere AD < 1,1 · ID, ganz bevorzugt AD < 1,05 · ID, d.h. die Außenwandung des Aufnahmebauteils ist relativ dünn.

Die Dichtheit des Sensorbauteiles, das mittels Metalllot oder Glaslot mit der Ausnehmung verbundenes Sichtglas umfasst, beträgt bevorzugt weniger als 10 bar, bevorzugt liegt sie zwischen 1 bar und 10 bar. Ein Aufnahmebauteil, das ein Sichtglas umfasst, das mit einem Metalllot oder mit einem Glaslot mit dem Aufnahmebauteil verbunden wurde, kann in die Aussparung des Sensorbauteiles eingelötet werden, das Sensorbauteil wiederum kann durch Löten oder durch Laserschweißen mit den Treibstoffzuleitungen verbunden werden. Beim Löten des Glasmaterials beträgt die Löttemperatur (erste Löttemperatur) bevorzugt 200°C bis 500°C, bevorzugt 250°C bis 350°C. Die Löttemperatur (zweite Löttemperatur) beim Verlöten der Treibstoffzuleitungen mit dem Sensorbauteil mit eingelötetem Aufnahmebauteil liegt stets unterhalb der Löttemperatur mit das Glasmaterial in die Kappe eingelötet wird.

In einer zweiten Ausgestaltung wird das Sichtglas in die Ausnehmung des Aufnahmebauteils eingeglast, d.h. das Glasmaterial wird zunächst in die Ausnehmung eingelegt, dann werden das Glasmaterial und das Aufnahmebauteil, bevorzugt aus Metall, erwärmt, so dass das Glasmaterial aufgeschmilzt und nach dem Abkühlen das Metall auf das Glasmaterial aufschrumpft und eine kraftschlüssige Verbindung zwischen dem Glasmaterial und dem Metall des Aufnahmebauteils ausgebildet wird. Bei dieser Art handelt es sich um eine sogenannte Druckeinglasung, die Gegenstand der Erfindung ist und bei der der Ausdehnungskoeffizient des Glasmaterials vom Material des Aufnahmebauteils sich unterscheidet, d.h. der Unterschied ist in der Regel, aber nicht zwingend, größer als 20 %. Ist bei der zweiten Ausführungsform der Erfindung das Aufnahmebauteil kreisförmig mit einem Außendurchmesser AD und die Ausnehmung kreisförmig mit einem Innendurchmesser ID, so gilt in einem solchen Fall AD > 1,3 ID, bevorzugt AD > 1,4 ID, ganz bevorzugt AD > 1,5 · ID.

Der Vorteil der zweiten Ausgestaltung, bei der das Glasmaterial aufgeschmilzt und eine Druckglasverbindung ausbildet, liegt darin, dass das Aufnahmebauteil im Bereich der Aussparung durch Hartlöten mit dem Sensorbauteil verbunden werden kann. Hartlöten weist beispielsweise Löttemperaturen im Bereich 700°C bis 1050°C, bevorzugt 800°C bis 900°C.

Anschließend an das Einbringen in die Ausnehmung des Aufnahmebauteils wird diese in die Ausnehmung im Sensorabschnitt eingesetzt und das Aufnahmebauteil z. B. durch Löten oder Laserschweißen für das erste Ausführungsbeispiel oder Hartlöten oder Laserschweißen oder Löten für das zweite Ausführungsbeispiel mit dem Sensorabschnitt verbunden. Ein Erwärmen des gesamten Sensorabschnittes zum Einglasen wie im Stand der Technik ist nicht nötig.

Vorteilhafterweise wird das Aufnahmebauteil in die Ausnehmung des Sensorabschnittes zusammen mit dem Löten, Laserschweißen bzw. Hartlöten des Sensorabschnittes mit Leitungsteilen, z. B. der Treibstoffleitung, vorgenommen. Dadurch, dass im Wesentlichen alle Bauteile zusammen bearbeitet, d.h. verlötet bzw. hartgelötet werden können, wird erheblich Bearbeitungszeit gegenüber Bauteilen im Stand der Technik eingespart.

Alternativ zu einem Einbringen des Sichtglases in ein Aufnahmebauteil kann das Sichtglas mit Hilfe eines Metalllotes direkt mit dem Sensorabschnitt im Bereich der Aussparung verbunden werden.

Bei der ersten Ausgestaltung der Erfindung, sind, um die Sichtgläser auf einfache Art und Weise mit Hilfe eines Metalllotes mit dem Metall, insbesondere Edelstahl, Kovar oder Stahl, durch Löten verbinden zu können, die Sichtgläser bevorzugt wenigstens im Randbereich, d. h. am Umfang Ihrer Planfläche metallisiert. Bevorzugt, aber nicht zwingend, kann die Metallisierung einen hohen Kupferanteil umfassen.

Eine ausreichende mechanische Belastbarkeit weist insbesondere ein Alkalisilikatglas, ein Borosilikatglas, oder ein Saphirglas, auf, das bei Ausbildung mit einer metallisierten Randschicht direkt mit Edelstahl verbunden werden kann.

Alkalisilikatglas, Borosilikatglas oder Saphirglas sind als Sichtgläser bevorzugt aufgrund der hohen mechanischen Festigkeit und hohen chemischen Beständigkeit.

Die Ausgestaltung des Sensorabschnittes mit einem Aufnahmebauteil, insbesondere einer Kappe, die das Sichtglas aufnimmt, hat den Vorteil, dass in einer Aussparung des Sensorbauteils bzw. optischen Durchflusssensors im Bereich des Sensorabschnitts eine vorgefertigte, z. B. mit einem Sichtglas versehene Kappe, insbesondere eine Metallkappe, beispielsweise eine Edelstahlkappe, nachträglich eingesetzt werden kann.

Alternativ zur Ausgestaltung des Aufnahmebauteils als Kappe wäre auch eine Ausgestaltung als Ring denkbar, wobei der Ring ein oder mehrere Saphirgläser aufnimmt und der Ring zusammen mit den Saphirgläsern im Bereich der Aussparungen des Sensorabschnitts angeordnet wird. Hierzu kann der Ring mit dem Sensorabschnitt verlötet werden.

Bevorzugt ist das Sensorbauteil als rohrförmiger Körper mit einem Querschnitt, bevorzugt einem kreisrunden Querschnitt ausgebildet.

Bei einer derartigen Ausführungsform ist es vorteilhaft, wenn der Querschnitt Q$_1$ des Sensorbauteiles im Sensorabschnitt im Wesentlichen gleich dem Querschnitt Q$_2$ der angeschlossenen Leitungsteile ist. Dies hat den Vorteil, dass nur ein geringer Strömungswiderstand beim Übergang von den Leitungsteilen zum Sensorabschnitt auftritt.

Durch Einstellung des Abstandes A der Aufnahmebauteile zueinander in den Aussparungen können die optische Eigenschaften der Lichtquelle beziehungsweise der Glasmaterialien beziehungsweise des zu sensierenden Mediums leicht eingestellt werden. Durch die weitere Einstellung des Innendurchmessers des Sensorbauteiles DS ist möglich, den Querschnitt Q$_1$ an den Querschnitt Q$_2$ der Zuleitung anzupassen.

Ein weiterer Vorteil der erfindungsgemäßen Ausgestaltung ist, dass die Größe der Ausnehmung im Aufnahmebauteil eingestellt werden kann. Die Größe der Ausnehmung und wird dabei der Durchmesser für das Sichtglas so gewährt, dass die optischen Anforderungen erfüllt werden können, z. B. in Bezug auf Strahlbreite oder das durchstrahlte Volumen.

Neben dem Sensorbauteil stellt eine Ausführungsform der Erfindung auch einen optischen Durchflusssensor mit wenigstens einem optischen Sensor, zur Verfügung, wobei der optische Durchflusssensor ein Sensorbauteil gemäß der Erfindung umfasst. Der optische Durchflusssensor umfasst vorteilhafterweise eine Lichtquelle, insbesondere eine Leuchtdiode, insbesondere ein Leuchtdiodenarray.

Die Lichtquelle, insbesondere die Leuchtdiode, bevorzugt das Leuchtdiodenarray strahlt bevorzugt Licht mit einer Wellenlänge im Infraroten, insbesondere im Wellenlängenbereich 1 μm bis 2 μm ab.

Andere Wellenlängen sind ebenfalls denkbar. Bevorzugt werden solche Wellenlängen gewählt, die eine ausreichend hohe Transmission beim Durchtritt durch das zu vermessende fluide und/oder gasförmige Medium aufweisen. Diesbezüglich wird auf die DE 10 2007 025 585A1 verwiesen, deren Offenbarungsgehalt vollumfänglich in vorliegende Anmeldung mit eingeschlossen wird. Eine Art des optischen Sensors umfasst eine Lichtquelle, beispielsweise ein LED-Lichtquellenarray, das Licht nach einem Strahlteiler durch das erste Sichtglas, das Medium, insbesondere die Flüssigkeit, bevorzugt den Treibstoff mit der zu detektierenden Flüssigkeit und das zweite Sichtfenster hindurch auf einen ersten Detektor lenkt, der das ankommende Lichtsignal detektiert. Besonders bevorzugt ist es, wenn der ankommende Lichtstrahl spektral aufgelöst detektiert wird. In einem solchen Fall lassen sich mit dem Detektor mehrere Stoffe, die den optischen Durchflusssensor durchströmen, detektieren. Soll mit dem Detektor nur eine Substanz detektiert werden, so wäre beispielsweise die Detektion einer einzigen Wellenlänge, die für die Substanz charakteristisch ist, ausreichend. Ein Teil des Lichtes der Lichtquelle wird nach dem Strahlteiler direkt auf einen zweiten Detektor gelenkt und dort ebenfalls spektral aufgelöst detektiert. Aus einem Vergleich des Signals des ersten Detektors mit dem Signal des zweiten Detektors kann dann rückgeschlossen werden auf die Zusammensetzung des Mediums, insbesondere der Flüssigkeit, bevorzugt des Treibstoffs.

Besonders bevorzugt ist es, wenn das Sichtglas eine planparallele, mechanisch belastbare und bevorzugt mit einem Metall, insbesondere Edelstahl, Kovar oder Stahl verbindbare Glasscheibe ist. Die planparallele und mit Metall, insbesondere Edelstahl, Kovar oder Stahl verbindbare Glasscheibe ist mechanisch belastbar. Die Glasscheibe kann sowohl plan als auch gebogen, um optische Eigenschaften darzustellen ausgeführt sein. Unter Glasscheibe werden in vorliegender Anmeldung unterschiedliche Ausgestaltungen verstanden, nämlich sowohl Einfachglasscheiben als auch Laminate oder Verbunde von Scheiben. Insbesondere umfassen die Glasscheiben auch spezielle Funktionen, z. B. Filterfunktionen, beispielsweise als Kantenfilter, Farbfilter oder Transmissionsfilter. Des Weiteren können die Glasscheiben auch mit Beschichtungen, insbesondere Funktionsbeschichtungen wie Anti-Reflex-Beschichtungen oder bestimmte Wellenlängen blockierende Beschichtungen wie UV-Beschichtungen oder IR-Beschichtungen versehen sein.

Neben dem optischen Durchflusssensor stellt die Erfindung gemäß einer Ausführungsform auch eine Vorrichtung zur Aufnahme und/oder zur Leitung flüssiger oder gasförmiger Medien mit einem derartigen optischen Durchflusssensor zur Verfügung.

Als Medien, deren physikalische Eigenschaften in der Leitung oder in dem Behältnis mit Hilfe eines optischen Durchflusssensors gemessen werden können, kommen Gase oder Flüssigkeit in Frage. Als Gas kommt insbesondere Erdgas, sowohl in gasförmiger, als auch in komprimierter oder flüssiger Form oder Autogas in Frage. Auch Industriegase, wie beispielsweise Wasserstoff, N$_2$, O$_2$, insbesondere auch in flüssiger Form, wie flüssiger Wasserstoff und flüssiger Stickstoff können gemessen werden. Des Weiteren können Abgase von Verbrennungsmotoren sowie Prozessgase der chemischen und der Halbleiterindustrie und Luft auf ihrer physikalischen Eigenschaften hin, untersucht werden. Weitere Medien, die in den Leitungen beziehungsweise Behältern auf ihre physikalischen Eigenschaften mit Hilfe des erfindungsgemäßen Sensorbauteils gemessen werden können, sind insbesondere Wasser, Salzwasser, Öle, insbesondere von Motorengetrieben, Hydrauliköle, Alkohole, insbesondere Methanol, Ethanol, Propanol, Butanol, Butandiol, insbesondere als Zumischung in Kraftstoffen. Weitere Flüssigkeiten, deren physikalische Eigenschaften mit Hilfe der erfindungsgemäßen Ausgestaltung in einer Sensoreinrichtung gemessen werden könne, sind insbesondere Kraftstoffe, wie Benzin und Dieselkraftstoff, Rapsöl, Methylesther sowie Treibstoffe für Flugzeugturbinen oder Schiffsmotoren- und/oder -turbinen. Auch flüssige Stoffe zur Abgasreinigung, wie Harnstoff oder Harnstofflösungen, die derzeit beispielsweise zur Abgasreinigung bei Dieselfahrzeugen eingesetzt werden, sind mit Hilfe der erfindungsgemäßen Durchführung in einer Leitung oder einem Behältnis zu detektieren. Des Weiteren kann jede Art von Prozessflüssigkeit in der Industrie, insbesondere in der chemischen Industrie und der Halbleiterindustrie mit Hilfe der Durchführung mit einer Leitung beziehungsweise einem Tank sensiert werden. Auch Medien, die in Klimaanlagen oder Kühlschränken eingesetzt werden, wie zum Beispiel Fluorkohlenwasserstoffe, sind mit Hilfe der erfindungsgemäßen Vorrichtung detektierbar.

Die hier aufgeführten Aufzählungen der mit Hilfe der erfindungsgemäßen Vorrichtung detektierbaren Gase beziehungsweise Flüssigkeiten ist lediglich beispielhaft und keineswegs einschränkend zu verstehen.

Besonders bevorzugt umfasst die Vorrichtung Leitungsteile, die mit dem Sensorbauteil bevorzugt den Bauteilschnitten, insbesondere stoffschlüssig bevorzugt durch Löten, Hartlöten oder Schweißen, insbesondere Laserschweißen verbunden sind.

Besonders bevorzugt wird der optische Durchflusssensor in Kraftstoffleitungen eingesetzt, insbesondere zur Bestimmung von Zusammensetzung von Kraftstoffgemischen. Neben dem optischen Durchflusssensor, kurz dem Sensorbauteil der Vorrichtung zur Aufnahme und/oder Leitung flüssiger oder gasförmiger Medien mit einem derartigen optischen Durchflusssensor stellt die Erfindung auch ein Verfahren zur Herstellung eines Sensorbauteiles für einen optischen Durchflusssensor zur Verfügung. Das erfindungsgemäße Sensorbauteil für einen optischen Durchflusssensor kann auf unterschiedliche Art und Weise hergestellt werden.

Bei dem erfindungsgemäßen Verfahren wird das Sichtglas zunächst in ein Aufnahmebauteil, beispielsweise eine Kappe eingebracht und mit diesem verbunden. Anschließend wird das Aufnahmebauteil mit dem Sichtglas in die Aussparung des Sensorabschnittes des Sensorbauteiles eingebracht.

Für das Einbringen des Sichtglases in die Aufnahmeöffnung des Aufnahmebauteiles kann gemäß einem ersten Verfahren Sichtglas und Aufnahmebauteil derart erwärmt werden, dass das Sichtglas in Form eines Druckglases in die wenigstens eine Aufnahmeöffnung eingeglast wird. Hierbei schmilzt das Glas auf.

Anschließend wird das Aufnahmebauteil in die Aussparung eingebracht und im Bereich der Aussparung mit dem Sensorbauteil bzw. -abschnitt verbunden.

Alternativ zur direkten Einglasung in der Aufnahmeöffnung des Aufnahmebauteiles kann ein Glaslot in die wenigstens eine Aufnahmeöffnung eingebracht werden. Anschließend wird das Sichtglas eingebracht und Sichtglas und Aufnahmebauteil derart erwärmt, dass das Glaslot mit dem Sichtglas in der Aufnahmeöffnung in Form eines Druckglases verschmilzt. Anschließend wird das Aufnahmebauteil in die Aussparung eingebracht und im Bereich der Aussparung mit dem Sensorbauteil bzw. -abschnitt verbunden.

Der Vorteil der zuvor beschriebenen zwei Verfahren, bei denen das Glasmaterial aufgeschmolzen und in die Aufnahmeöffnung als Druckeinglasung eingebracht wird, ist die Möglichkeit, das Aufnahmebauteil mit dem Sensorbauteil durch Hartlöten oder Laserschweißen zu verbinden. Auch das Sensorbauteil kann mit Hartlöten mit z. B. Leitungsteilen verbunden werden. Als Glasmaterial für eine Direkteinglasung eignen sich Alkalisilikatgläser wie beispielhaft das Glas B270 der SCHOTT AG mit einem Ausdehnungskoeffizienten von $\alpha \approx 10 \cdot 10^{-6}$ K oder Borosilikatgläser wie das Glas 8800 oder 8436 der SCHOTT AG mit einem Ausdehnungskoeffizienten von $\alpha \approx 5$ bis $6 \cdot 10^{-6}$ K.

Eine möglich beispielhafte Glaskombination für eine Einglasung eines Sichtglases mittels eines Lotglases ist die Kombination des Borosilikatglases 8800 der SCHOTT AG als Sichtglas mit dem Glas G018161 als Lotglas. Alternativ hierzu kann man das Borosilikatglas 8800 der Schott AG auch als Lotglas verwenden in Kombination mit Saphirglas als Sichtglas.

In einem nicht zur Erfindung gehörenden Verfahren wird zunächst das Sichtglas, wenigstens im Randbereich metallisiert. Sodann erfolgt das Einlöten des metallisierten Sichtglases, in das Aufnahmebauteil, insbesondere eine Kappe, insbesondere eine Edelstahlkappe. Alternativ zu einer Kappe könnte auch ein Ring im Bereich der Aussparungen eingebracht werden, wobei im Ring ein oder mehrere Sichtgläser angeordnet sind. Nach Herstellung der Kappe bzw. des Ringes und Ausrüsten desselben mit dem(n) Sichtglas bzw. -gläsern wird die Kappe bzw. der Ring mit dem eingelöteten Sichtglas mit dem Sensorbauteil, insbesondere im Bereich der Öffnung des Sensorbauteils verbunden, bevorzugt durch Schweißen, insbesondere durch Laserschweißen, Löten.

In einer weiteren alternativen Ausführungsform kann zur Herstellung des Sensorbauteiles für den Durchflusssensor für fluide und/oder gasförmige Medien der Sensorabschnitte des Sensorbauteiles im Bereich der Aussparung mit einem Glaslot, insbesondere einem Glaslotring versehen werden. Daran anschließend wird das Sichtglas mit dem Glaslotring, insbesondere durch Verschmelzen verbunden. Da das Glaslot in der Regel eine niedrige Verschmelztemperatur aufweist, ist die thermische Belastung des Sensorbauteiles und des Sichtglases in der Regel gering

Nachfolgend soll die Erfindung anhand der Figuren ohne Beschränkung hierauf beschrieben werden.

Es zeigen:

Fig. 1     ein erfindungsgemäßes Sensorbauteil mit einem mittels Metalllot oder Glaslot mit dem Aufnahmebauteil verbundenen Sichtglas in prinzipieller Ansicht;

Fig. 2     ein Sichtglas mit Leuchtmitteln und Sensoren;

Fig. 3     eine Aufnahmebauteil mit einem Sichtglas, das mit Randbereich metallisiert wurde;

Fig. 4     einen Querschnitt durch das Sensorbauteil im Bereich der Kappe gemäß Fig. 3;

Fig. 5    eine alternative Ausgestaltung einer Verbindung von Sichtglas und Edelstahlrohr;

Fig. 6    ein Aufnahmebauteil mit einem direkt eingeglasten Sichtglas;

Fig. 7    ein Aufnahmebauteil mit einem mittels eines Glaslotes eingeglasten Sichtglas;

Fig. 8    ein Sensorbauteil mit einem direkt eingeglasten Sichtglas gemäß Fig. 6 oder in Figur 7 in prinzipieller Ansicht.

Fig. 9    einen Querschnitt durch das Sensorbauteil im Bereich der Kappe gemäß Figur 6 oder Figur 7.

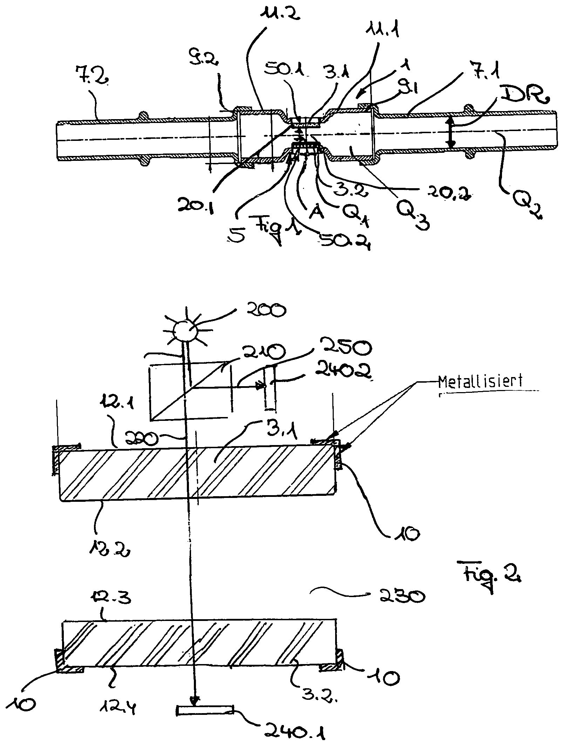

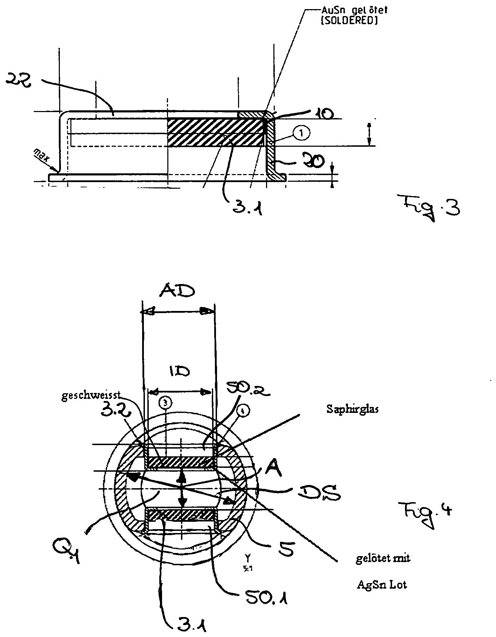

Fig. 1 zeigt in einer prinzipiellen Ansicht ein erfindungsgemäßes Sensorbauteil 1 mit zwei Sichtgläsern 3.2, 3.1, eingebaut im Bereich eines Sensorabschnittes 5 des Sensorbauteiles für einen optischen Durchflusssensors 4. Die Sichtgläser 3.2, 3.1 sind vorliegend mit einem Metalllot oder Glaslot mit einem Aufnahmebauteil, hier in Form einer Kappe 20, 20.1, 20.2, wie in Fig. 3 detailliert, dargestellt, verbunden und in je eine Ausnehmung 50.1, 50.2 des Sensorbauteiles eingesetzt und stoffschlüssig mit dem Sensorbauteil 1, z. B. durch Löten, oder Laserschweißen verbunden. Das Sensorbauteil 1 und damit der optische Durchflusssensor wiederum ist eingebaut bzw. angeschlossen an eine Leitung mit Leitungsteilen 7.1, 7.2. Die Verbindung der Leitungsteile 7.1, 7.2 mit dem Sensorbauteil des optischen Durchflusssensor 1 erfolgt im Bereich 9.1, 9.2 des Sensorbauteiles 1. Das Sensorbauteils 1 des optische Durchflusssensor umfasst neben dem Sensorabschnitt 5 zwei Bauteilabschnitte 11.1, 11.2, die mit den Leitungsteilen 7.1, 7.2 verbunden sind. Der optische Durchflusssensor umfasst eine Lichtquelle, einen Strahlteiler sowie zwei optische Detektoren, einen ersten Detektor und einen zweiten Detektor. Dies ist detailliert in Figur 2 gezeigt. Das Sensorbauteil 1 für den optischen Durchflusssensor ist bevorzugt ein rohrförmiger Körper mit einem Querschnitt, bevorzugt einem kreisrunden Querschnitt. Der rohrförmige Körper kann beispielsweise ein Edelstahlrohr sein.

Bei der Ausgestaltung wie in Fig. 1 gezeigt verringert sich der Querschnitt des Sensorabschnittes 5 bzw. des rohrförmigen Körpers von $Q_2$ auf $Q_1$ im Bereich des Sensorabschnittes 5 mit Sichtgläsern 3.1, 3.2. Dies ist vorteilhaft, aber nicht zwingend. Die Sichtgläser 3.1, 3.2 bei der Ausgestaltung gemäß Fig. 1 sind auf gegenüberliegenden Seiten des Sensorabschnittes angeordnet. Die Anordnung der Sichtgläser 3.1, 3.2 bestimmen den Querschnitt $Q_1$ im Bereich des Sensorabschnittes. Der Querschnitt $Q_1$ im Bereich des Sensorabschnittes ist bestimmt zum einen durch den Abstand A der beiden Aufnahmebauteile mit den Sichtgläsern sowie den Innendurchmesser DS des Sensorbauteiles. Durch die Einstellung des Abstandes A der Aufnahmebauteile zueinander in den Aussparungen des Sensorbauteiles leicht eingestellt werden. Insbesondere ist es möglich je nach der Transparenz des zu sensierenden Mediums den Abstand zu wählen, insbesondere derart, dass unter Berücksichtigung der Lichtquelle und der optischen Eigenschaften der Glasmaterialien eine für eine Messung ausreichende Durchstrahlung des Mediums gewährleistet wird. Der Innendurchmesser des Sensorbauteiles DS wird dann so gewählt, dass der Querschnitt $Q_1$ im Sensorabschnitt im wesentlichen dem Querschnitt $Q_2$ im Bereich der Leitungsteile entspricht. Da die Leitungsteile in der Regel Rohre mit kreisundem Querschnitt einem Innendurchmesser DR sind, ist $Q_2$ gegeben zu $Q_2 = \pi \cdot (DR/2)^2$ Da die Aufnahmebauteile, z. B. Kappen, mit den Sichtgläsern in den Aussparungen des Sensorabschnittes vertikal, d.h. senkrecht zur Achsrichtung bewegt werden können, kann der Abstand A der Kappen zueinander und damit der Querschnitt $Q_1$ im Bereich des Sensorabschnittes eingestellt werden, angepasst beispielsweise auf das Durchflussmedium, die Lichtquelle oder die optischen Eigenschaften der Sichtgläser. Ein weiterer Vorteil ist, dass die Größe der Ausnehmung im Aufnahmebauteil und der Durchmesser des Sichtglases an die optischen Anforderungen angepasst werden können.

Bei der in Figur 1 dargestellten Ausführungsform sind das Sichtglas bzw. die Sichtgläser 3.1, 3.2 in das Aufnahmebauteil in Form einer Edelstahlkappe gemäß der ersten Ausführungsform der Erfindung mit einem Metalllot. Das Aufnahmebauteil ist vorliegend kreisrund mit einem Außendurchmesser AD und einer kreisrunden Aufnahmeöffnung 22 mit einem Innendurchmesser ID, wie in Fig. 1 gezeigt. Bei dem Aufnahmebauteil gemäß Figur 1 ist die Außenwandung sehr dünn, d.h. es gilt $AD < 1,2 \cdot ID$, bevorzugt $AD < 1,1 \cdot ID$, insbesondere $AD < 1,05 \cdot ID$. Um das Sichtglas mit dem Aufnahmebauteil mit sehr dünner Außenwandung verbinden zu können, bevorzugt durch Löten mit einem Metalllot, sind die Sichtfenster 3.1, 3.2 metallisiert. Bei den Sichtgläsern bzw. Sichtfenstern 3.1, 3.2 handelt es sich z. B. um metallisierte Saphirgläser, die planparallel ausgebildet und in ein Aufnahmeanteil, hier eine Edelstahlkappe 20, eingebracht sind. Auch andere Glasmaterialien sind möglich. Vorliegend weist das Sichtglas 3.1, 3.2 im Randbereich auf einer Seite der planparallelen Flächen 12.1, 12.2, 12.3, 12.4 die Metallisierung 10 auf. Bevorzugt wird die Metallisierung 10 aufgebracht, um das Sichtglas 3.1, 3.2 mit dem Metall, insbesondere dem Edelstahl des Aufnahmebauteils 1 auf einfache Art und Weise, insbesondere durch Löten verbinden zu können. Dies ist detailliert in Figur 2 dargestellt.

In Fig. 2 des Weiteren detailliert gezeigt ist eine Möglichkeit der Ausführung eines optischen Sensors, wie er in einem optischen Durchflusssensor ausgeführt sein kann. Des Weiteren gezeigt, ohne Beschränkung hierauf, sind die Sichtgläser 3.1, 3.2, wie sie in einem Aufnahmebehälter, insbesondere eine Edelstahlkappe, beispielsweise wie in Fig. 1 gezeigt, durch Löten mit einem Metalllot eingesetzt werden können.

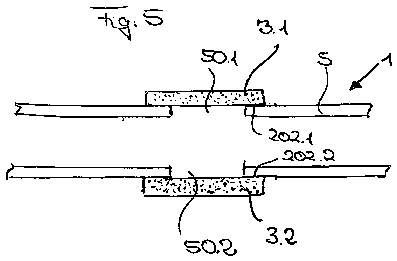

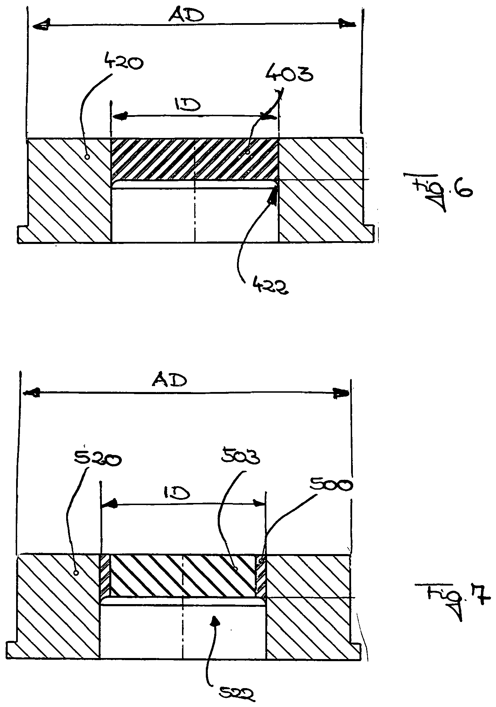

Auch bei einer Ausführungsform mit in den Aufnahmebehälter eingeglastem Sichtfenster gemäß den Figuren 6 bis 7 und einem auf das Sensorbauteil direkt aufgebrachtem Sichtfenster gemäß Figur 5 kann der in Figur 2 gezeigte optische Sensor ohne Beschränkung hierauf verwandt werden.

Der optische Sensor umfasst eine Lichtquelle 200, die bevorzugt eine Leuchtdiode sein kann, die Licht im IR-Wellenlängenbereich von beispielsweise 1 μm bis 2 μm emittiert. Im Lichtweg nach der Lichtquelle ist ein Strahlteiler 210 durch das erste Sichtglas 3.1 hindurch in das Innere des Sensorbauteils (nicht gezeigt) geleitet. Der Teil 220 des Lichts durchtritt das Medium 230 im Innern des Sensorbauteils, wird dabei beispielsweise durch Absorption, die spezifisch für das Medium ist, das durchstrahlt wird, geschwächt, durchtritt das zweite Sichtfenster 3.2 und trifft dann auf einen ersten Detektor 240.1. Auf dem ersten Detektor 240.1 wird das auftreffende Licht spektral aufgespalten. Die Schwächung des Lichtsignals bei bestimmten IR-Wellenlängen lässt dann analog, z. B. zur IR-Spektroskopie, Rückschlüsse auf die Zusammensetzung des durchstrahlten Mediums zu. Um die Absorption durch das Medium quantifizieren zu können, wird ein anderer Teil 250 des Lichts der Lichtquelle 200 nach dem Strahlteiler 210 auf einen zweiten Detektor 240.2 gelenkt und dort ebenfalls wieder spektral aufgespalten. Ein Vergleich des Signals des ersten Detektors und des zweiten Detektors lässt dann eine direkte Quantifizierung zu.

Alternativ zu der zuvor beschriebenen Ausgestaltung mit zwei Detektoren wäre es auch möglich, nur einen einzigen Detektor zu verwenden und die Lichtquelle im abwechselnden Pulsbetrieb zu betreiben. Wie beschrieben können die Sichtgläser 3.1, 3.2, die mit einer Metallisierung 10 versehen sind in eine Aufnahmeöffnung 22 oder oberhalb einer Aufnahmeöffnung mit dem Aufnahmebauteil, insbesondere in Form einer Kappe 20 mit einem Metalllot verlötet werden. Beim Verlöten mit einem Glaslot kann die Metallisierung entfallen. Hierbei wird bevorzugt Löten eingesetzt. Die Löttemperatur liegt dabei bevorzugt im Bereich 200° C bis 500° C, bevorzugt im Bereich 250°C bis 350°C.

Das Löten ist dann besonders einfach, wenn die Metallisierung einen hohen Kupferanteil aufweist.

Bevorzugt wird bei dem Sensorbauteil, wie z. B. in Fig. 1 gezeigt das Sichtglas, insbesondere das Borosilikatglas oder Saphirglas direkt oder indirekt in eine Aussparung bzw. Öffnung oder auf die Aussparung bzw. Öffnung des Sensorbauteils 1 im Bereich des Sensorabschnittes 5 eingesetzt oder aufgesetzt oder direkt aufgelötet.

Fig. 3 zeigt als Beispiel für ein Aufnahmebauteil eine Edelstahlkappe 20 mit einer dünnen Außenwandung, die beispielsweise durch Tiefziehen hergestellt wurde. Die Edelstahlkappe weist eine Öffnung bzw. Aufnahmeöffnung 22 auf. Oberhalb der Öffnung bzw. Aufnahmeöffnung 22 wird das Sichtglas, insbesondere Saphirglas 3.1 eingebracht und im Bereich der Metallisierung 10 mit der Edelstahlkappe 20 verlötet. Als Lötmaterial wird hier insbesondere Au/Sn eingesetzt.

Nach Herstellung des Aufnahmebauteiles, insbesondere der Edelstahlkappe mit einem Sichtglas, beispielsweise einem Saphirglas wird diese wie in Fig. 4 gezeigt, in eine Aussparung 50.1, 50.2 im Sensorabschnitt 5 des Sensorbauteils 1 aus Fig. 1 eingesetzt. Die Verbindung der Edelstahlkappe 20, die das Sichtglas 3.1, 3.2 trägt, mit dem Sensorabschnitt 5 des Sensorbauteils 1 kann mittels Schweißen oder Löten erfolgen. Des Weiteren geht aus Fig. 4 hervor, dass sich die beiden Sichtglasscheiben 3.1, 3.2 mit einem Abstand A gegenüberliegen, so dass Licht von einer Seite des Sensorbauteils 1 zur anderen Seite hindurch treten kann und so die Bestimmung physikalischer Eigenschaften von zwischen den Sichtgläsern 3.1, 3.2 hindurch fließendem Fluid ermöglicht wird. Deutlich in Fig. 4 zu erkennen sind die Aussparungen 50.1, 50.2 des Sensorbauteiles 1 für den optischen Durchflusssensor, in den vorliegend die Aufnahmebauteile, insbesondere die Kappen 20, die das Sichtglas 3.1, 3.2 im Abstand A umfassen, eingesetzt werden.

Der Querschnitt $Q_1$ im Bereich des Sensorabschnittes ist bestimmt zum einen durch den Abstand A der beiden Aufnahmebauteile mit den Sichtgläsern sowie den Innendurchmesser DS des Sensorbauteiles. Durch die Einstellung des Abstandes A der Aufnahmebauteile zueinander in den Aussparungen des Sensorbauteiles leicht eingestellt werden. Insbesondere ist es möglich je nach der Transparenz des zu sensierenden Mediums den Abstand zu wählen, insbesondere derart, dass unter Berücksichtigung der Lichtquelle und der optischen Eigenschaften der Glasmaterialien eine für eine Messung ausreichende Durchstrahlung des Mediums gewährleistet wird. Der Innendurchmesser des Sensorbauteiles DS wird dann so gewährt, dass der Querschnitt $Q_1$ im Sensorabschnitt im wesentlichen dem Querschnitt $Q_2$ im Bereich der Leitungsteile entspricht. Da die Leitungsteile in der Regel Rohre mit kreisundem Querschnitt einem Innendurchmesser DR sind, ist $Q_2$ gegeben zu $Q_2 = \pi \cdot (DR/2)^2$

Ein weiterer Vorteil ist, dass die Größe der Ausnehmung im Aufnahmebauteil und der Durchmesser des Sichtglases an die optischen Anforderungen angepasst werden können.

Anstelle der Aufnahme des Sichtglases 3.1, 3.2 in einem Aufnahmebauteil und Einbringen des Aufnahmebauteiles in der Aussparung 50.1, 50.2 des Sensorbauteiles kann das Sichtglas 3.1, 3.2 auch direkt in die Aussparung eingebracht und verbunden werden, beispielsweise durch Löten von metallisierten Glasteilen in die Aussparung. Eine derartige Ausführungsform hat aber den Nachteil, dass der Abstand der Sichtgläser durch die Geometrie des Sensorbauteiles gegeben ist, weswegen eine leichte Einstellbarkeit des Abstandes der Sichtgläser 3.1, 3.2 zueinander nicht möglich ist und damit die optischen Eigenschaften nicht, nicht eingestellt werden können.

Alternativ zum Einlöten des Sichtglases 3.1, 3.2 in die Aussparung kann das Sichtglas 3.1, 3.2 im Bereich der Aussparung 50.1, 50.2 auf den Sensorabschnitt 1 gelötet werden. In Fig. 5 ist eine derartige alternative Ausgestaltung der Verbindung von Sichtgläsern mit dem Sensorbauteil, das beispielsweise als Edelstahlrohr ausgeführt ist, gezeigt. Anstatt das Sichtglas, beispielsweise das Saphirglas, in ein Aufnahmebauteil, bspw. eine Edelstahlkappe oder eine Aussparung einzusetzen, wie bei Fig. 3 und Fig. 4 beschrieben, kann vorgesehen sein, auf das Sensorbauteil 1, insbesondere in Rohrform das Sichtglas 3.1, 3.2 im Bereich der Aussparungen 50.1, 50.2 des Sensorabschnittes 5 aufzusetzen. Die Sichtgläser 3.1, 3.2, insbesondere Saphirgläser, werden mit Metalllot mit dem Sensorabschnitt im Bereich 202.1, 202.2 verlötet.

In den Fig. 6 und 7 ist die zweite alternative Möglichkeit des Einbringens und Verbindens von wenigstens einem Sichtglas in die Aufnahmeöffnung eines Aufnahmebauteiles, das dann in die Aussparung des Sensorbauteiles eingebracht und mit diesem verbunden wird, gezeigt. Wie zuvor beschrieben wird das Sichtglas in einem ersten Schritt mit dem Aufnahmebauteil verbunden. Bevorzugt wird dabei das Aufnahmebauteil vorgefertigt und in einem weiteren Verfahrensschritt das vorgefertigte Aufnahmebauteil dann im Bereich der Aussparung mit dem Sensorbauteil z. B. durch Schweißen, bevorzugt Laserschweißen Löten oder auch Hartlöten verbunden. Hierbei kann der Abstand A zwischen den Sichtgläsern eingestellt werden.

Bei der Ausgestaltung gemäß den Figuren 6 bis 9 ist die Außenwandung des Aufnahmebauteils so ausreichend stark, dass das Glas in Form eines Druckglases in das Aufnahmebauteil eingeglast werden kann. Falls das Aufnahmebauteil mit Außendurchmesser AD kreisrund ausgeführt ist und die Aufnahmeöffnung, die beispielsweise durch Bohren oder Stanzen in das Aufnahmebauteil eingebracht wird, einen Innendurchmesser ID aufweist, so ist eine ausreichende Wandstärke gegeben für AD > 1,3 ID, bevorzugt AD > 1,4 ID, insbesondere AD > 1,5 ID. Außendurchmesser und Innendurchmesser sind in Fig. 6, 7 und 9 gezeigt.

Fig. 6 zeigt eine Ausgestaltung der Erfindung, bei der das Sichtglas 403 direkt in die Aufnahmeöffnung des Aufnahmebauteils, das vorliegend als umlaufender Ring 420, bevorzugt aus Edelstahl, Kovar oder Stahl ohne Beschränkung hierauf ausgelegt ist, eingeglast wird. Das direkte Einglasen erfolgt durch Einsetzen des Sichtglases 403 in die Aufnahmeöffnung 422 des Aufnahmebauteiles, das bevorzugt aus einem Stahl, insbesondere Edelstahl oder Kovar ist und anschließendes Erwärmen, wodurch das Glasmaterial aufschmilzt und das Metall, bevorzugt der Edelstahl auf das Glasmaterial des Sichtglases aufschrumpft ergebend eine Druckeinglasung. Die Druckeinglasung ist eine Folge der unterschiedlichen thermischen Ausdehnung von Glasmaterial und Metall des Aufnahmebauteils. Bevorzugt finden bei der Druckeinglasung Gläser mit einer sehr hohen Verschmelzungstemperatur von größer 800° C, bevorzugt größer 900° C, insbesondere größer 950° C Verwendung, beispielsweise Borosilikatgläser, Aluminiumsilikatgläser oder ein Saphirglas. Gläser mit einer hohen Verschmelzungstemperatur haben den Vorteil, dass das Aufnahmebauteil und damit das gesamte Sensorbauteil hartgelötet werden kann. Auch der Anschluss an die Leitungsteile mittels Hartlöten ist möglich.

Ein weiterer Vorteil der Druckeinglasung ist, dass eine Druckdichtigkeit auch bei hohen Drücken, insbesondere Drücken von mindestens 10 bar, gewährleistet wird. Als Material für das Sichtglas wird bevorzugt Borosilikatglas, Alkalisilikatglas, beispielsweise das Glas B270 der SCHOTT AG, Mainz oder ein Saphirglas verwandt.

Fig. 7 zeigt eine Ausgestaltung der Erfindung, bei der das Sichtglas 503 mittels eines Lotglases 500 in die Aufnahmeöffnung des Aufnahmebauteiles, das vorliegend als umlaufender Ring 520, bevorzugt aus Edelstahl ohne Beschränkung hierauf, eingeglast wird. Das Einglasen erfolgt durch Einsetzen des Lotglases 500 zusammen mit dem Sichtglas 503 in die Aufnahmeöffnung 522 des Aufnahmebauteiles, das bevorzugt aus einem Stahl, insbesondere Edelstahl, besteht und anschließendes Erwärmen, wodurch das Lotglas mit dem Metall und dem Sichtglas 503 druckdicht verschmilzt Wie bei dem Ausführungsbeispiel gemäß Figur 6, handelt es sich auch bei dem Ausführungsbeispiel gemäß Figur 5 um eine Druckeinglasung, d.h. eine nicht angepasste Einglasung, bei der die Ausdehnungskoeffizienten der unterschiedlichen Materialien, d.h. der Glasmaterialien sowie des Metalls sich unterscheiden. Bei der nicht angepassten Durchführung kann sich der Ausdehnungskoeffizient der Glasmaterialien und des bzw. der Metalle um mehr als 20 % unterscheiden.

Im Gegensatz zur direkten Einglasung gemäß Figur 6 kann man bei Verwendung von Lotglas mit niedrigeren Temperaturen eine druckdichte Verbindung Metall-Sichtglas erhalten, da das Lotglas niedrigere Verschmelztemperaturen als das Sichtglas aufweist. Mögliche Kombinationen sind die Verwendung des Lotglases G018161 in Kombination mit dem Sichtglas 8800, einem Borosilikatglas oder die Verwendung des Borosilikatglases 8800 als Lotglas mit einem Saphirglas als Sichtglas. Insbesondere für das Saphirglas mit einer Schmelztemperatur oberhalb 1000°C, für das eine direkte Einglasung nicht möglich ist, stellt die Einglasung mit Hilfe eines hochschmelzenden Lotglases eine Möglichkeit des Einbringens in eine Ausnehmung des Aufnahmebauteiles in Form einer Druckglasverbindung dar.

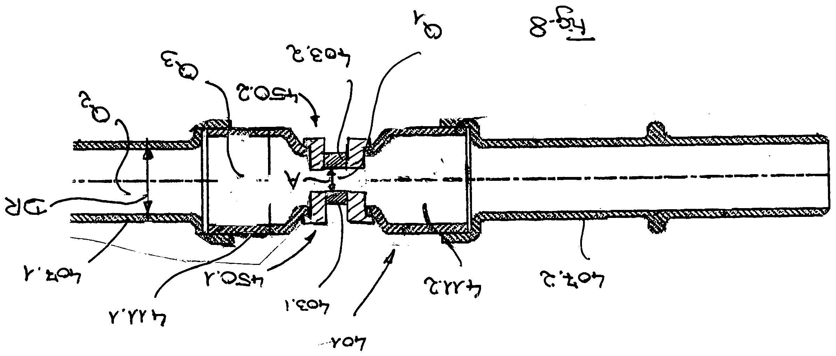

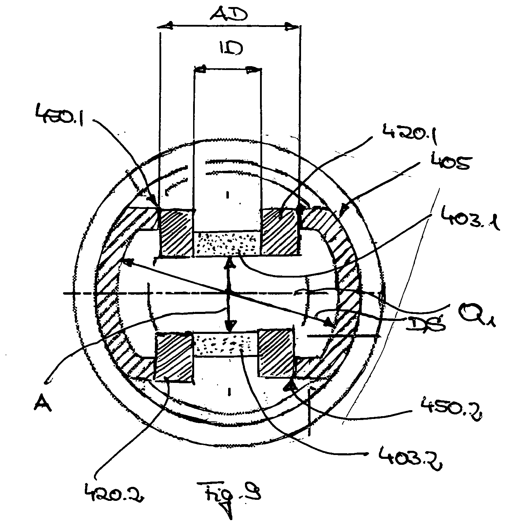

In Figur 8 ist ein Querschnitt durch ein Sensorbauteil wie in Figur 4 gezeigt. Gleiche Bauteile wie in Figur 4 sind mit um 400 erhöhten Bezugsziffern belegt. Im Gegensatz zu Figur 4 handelt es sich bei dem Aufnahmebauteil, das in Figur 8 in die beiden Aussparungen 450.1, 450.2 des Sensorbauteils eingesetzt wird, um ein Aufnahmebauteil mit einer Druckeinglasung gemäß Figur 6 oder Figur 7, auf die hier Bezug genommen wird. Das Sensorbauteil kann bis auf das Einbringen der Aussparungen durch Umformen auf einfache Art und Weise hergestellt werden. Auch die Leitungsteile 407.1, 407.2 sind durch Umformen herstellbar. Die Leitungsteile 407.1, 407.2 haben einen Querschnitt $Q_2$. Der Querschnitt $Q_2$ der Leitungsteile 407.1, 407.2 entspricht in etwa dem Querschnitt $Q_1$ des Sensorbauteiles im Bereich der Sichtgläser. Dies ist in Fig. 9 veranschaulicht. Dadurch, dass der Querschnitt im Bereich der Leitung dem Querschnitt im Messbereich weitgehend entspricht, treten keine Verluste durch Strömungswiderstände auf. Der Querschnitt des Sensorbauteiles im Bereich der Bauteilabschnitte 411.1, 411.2 ist größer als $Q_1$ und $Q_2$ und wird so gewählt, dass die Leitungsteile 407.1, 407.2 an das Sensorbauteil angeschlossen werden kann, z. B. dadurch, dass die Leitungsteile 407.1, 407.2 mit den Bauteilabschnitten 411.1, 411.2 hartverlötet oder lasergeschweißt werden. Der Querschnitt $Q_1$ im Bereich des Sensorbauteiles wird bestimmt durch den Abstand A der Sichtgläser zueinander und den Innendurchmesser DS. Der Abstand A ist einstellbar. Durch die Einstellung des Abstandes A der Aufnahmebauteile zueinander in den Aussparungen des Sensorbauteiles können die optischen Eigenschaften des Sensorbauteiles leicht eingestellt werden. Insbesondere ist es möglich je nach der Transparenz des zu sensierenden Mediums den Abstand zu wählen, insbesndere derart, dass unter Berücksichtigung der Lichtquelle und der optischen Eigenschaften der Glasmaterialien eine für eine Messung ausreichende Durchstrahlung des Mediums gewährleist wird. Der Innendurchmesser des Sensorbauteiles DS wird dann so gewählt, dass der Querschnitt Q1 im Sensorabschnitt im wesentlichen dem Querschnitt $Q_2$ im Bereich der Leitungsteile entspricht. Da die Leitungsteile in der Regel Rohre mit kreisrunden Querschnitt und einem Innendurchmesser DR sind, ist $Q_2$ gegeben zu $Q_2 = \pi \cdot (DR/2)^2$.

Ein weiterer Vorteil ist, dass die Größe der Ausnehmung im Aufnahmebauteil und der Durchmesser des Sichtglases an die optischen Anforderungen angepasst werden können.

In Fig. 9 ist, wie in Fig. 4, ein Querschnitt durch das Sensorbauteil im Bereich des Sensorabschnittes gezeigt. Gegenüber Fig. 4 weist das Aufnahmebauteil, wie in Fig. 6 gezeigt, eine ausreichend starke Außenwandung auf, um das Glasmaterial bzw. die Sichtgläser 403,1, 403.2 in Form eines Druckglases in der Aufnahmeöffnung aufnehmen zu können. Das Aufnahmebauteil in Fig. 9 ist als umlaufender Ring 420.1, 420.2 mit einem Außendurchmesser AD > 1,3 ID, bevorzugt AD > 1,4 ID, insbesondere AD > 1,5 ID ausgebildet. Das Aufnahmebauteil ist in den beiden Aussparungen 450.1, 450.2 im Sensorabschnitt 405, der vorliegend rohrförmig ausgebildet ist, hartverlötet. Des weiteren eingezeichnet in Fig. 9 ist der Abstand A der beiden Aufnahmebauteile in Form umlaufender Ringe 420.1, 420.2 sowie der Innendurchmesser DS, die zusammen den Durchflussquerschnitt $Q_1$ im Sensorabschnitt 405 bestimmen.

Alternativ zu der dargestellten Ausführungsform mit zwei Aussparungen 50.1, 50.2, 450.1, 450.2 und einen in Durchstrahlrichtung des Laserstrahls angeordneten Detektor wäre es auch möglich, nur eine Aussparung mit einem Sichtglas vorzusehen und auf der der Aussparung gegenüberliegenden Seite eine reflektierende bzw. bespiegelte oder polierte Fläche, so dass der durch das Medium geführte Lichtstrahl reflektiert und auf den auf derselben Seite wie die Lichtquelle angeordneten Detektor geführt. Eine derartige Ausgestaltung hat den Vorteil, dass die optische Wegstrecke beim zweimaligen Durchtritt durch das flüssige Medium verdoppelt wird, was insbesondere bei geringen Transmissionsänderungen, z. B. bei hoch verdünnten Stoffen, oder aber bei Messungen bei Detektionswellenlängen vorteilhaft ist, die bei oder in der Nähe der Absorptionsminima der zu detektierenden Stoffe liegen. Eine derartige Ausgestaltung ist für den Fachmann nachvollziehbar, obwohl nicht explizit dargestellt.

Mit der Erfindung wird somit erstmals ein Sensorbauteil angegeben, das eine optische Messung von fluiden Medien, insbesondere. Treibstoff, Treibstoffkomponenten, Erdgas, Wasserstoff, Stickstoff, Sauerstoff, Abgase von Verbrennungsmotoren, industrielle Prozessgase, Autogas, Luft, Wasser, insbesondere Salzwasser, Öle, insbesondere für Motoren, Getriebe- und Hydraulikanwendungen, Alkohole, insbesondere Methanol und Ethanol, Benzin und Dieselkraftstoff, Rapsöl, Methylesther, Flugzeugturbinentreibstoffe, Harnstoffe und Harnstofflösungen, Flurkohlenwasserstoffe, erlaubt.

Des Weiteren kann der Abstand der Aufnahmebauteile im Bereich des Sensorabschnittes sehr leicht an unterschiedliche Medien, Lichtquellen etc. angepasst werden, ohne dass das Sensorbauteil, in deren Aussparung(en) das bzw. die Aufnahmebauteil(e) eingesetzt werden, geändert wird. An den Abstand im Bereich des Sensorabschnittes kann wiederum der Innendurchmesser DS im Sensorabschnitt derart angepasst werden, dass der Durchflussquerschnitt $Q_1$ im Bereich des Sensorabschnittes mit dem Leitungsquerschnitt $Q_2$ der Anschlussleitungen übereinstimmt, wodurch Strömungswiderstände verhindert werden können. Insbesondere ermöglicht die erfindungsgemäße Ausgestaltung mit einem in eine Aufnahmeöffnung eines Aufnahmebauteils eingelassenen Sichtglases, dass die Größe und insbesondere der Durchmesser des Sichtglases einfach an die optischen Anforderungen angepasst werden können. Ein weiterer Vorteil ist die einfache Herstellbarkeit durch Umformen und insbesondere für die Druckeinglasungen, dass die einzelnen Bauteile hart gelötet werden können.

**Patentansprüche**

1. Sensorbauteil (1) für einen optischen Durchflusssensor für fluide und/oder gasförmige Medien, umfassend wenigstens einen Bauteilabschnitt (11.1, 11.2) und wenigstens einen Sensorabschnitt (5) wobei

   - der Sensorabschnitt (5) wenigstens zwei Sichtgläser (3.1, 3.2; 403.1, 403.2) im Bereich mehrerer Aussparungen (50.1, 50.2; 450.1, 450.2) in dem Sensorabschnitt (5) umfasst, die derart angeordnet sind, dass ein Lichtdurchtritt durch einen Querschnitt ($Q_1$) des Sensorabschnittes (5) ermöglicht wird

oder

- der Sensorabschnitt (5) genau ein Sichtglas (3.1) im Bereich einer Aussparung umfasst und auf der der Aussparung gegenüberliegenden Seite eine reflektierende Fläche, insbesondere eine verspiegelte oder polierte Oberfläche vorgesehen ist, so dass ein zweimaliger Lichtdurchtritt durch einen Querschnitt ($Q_1$) des Sensorabschnitts ermöglicht wird, wobei

- das Sensorbauteil ein in die eine oder mehrere Aussparungen (50.1, 50.2; 450.1, 450.2) einbringbares Aufnahmebauteil umfasst **dadurch gekennzeichnet, dass**

- das Sichtglas bzw. die Sichtgläser (3.1, 3.2, 403, 403.1, 403.2, 503) mit dem Aufnahmebauteil in Form einer Druckeinglasung stoffschlüssig verbunden ist bzw. sind.

2. Sensorbauteil nach Anspruch 1,
   **dadurch gekennzeichnet, dass**
   das Sichtglas (403) in eine Aufnahmeöffnung (422) des Aufnahmebauteiles direkt eingeglast ist.

3. Sensorbauteil nach Anspruch 1,
   **dadurch gekennzeichnet, dass**
   das Sichtglas (503) in eine Aufnahmeöffnung (522) des Aufnahmebauteiles mit Hilfe eines Lotglases eingeglast ist.

4. Sensorbauteil nach einem der Ansprüche 1 bis 3,
   **dadurch gekennzeichnet, dass**
   das Sichtglas (3.1, 3.2, 403, 403.1, 403.2, 503) ein Borosilikatglas, ein Alkalisilikatglas oder ein Saphirglas ist.

5. Sensorbauteil nach einem der Ansprüche 1 bis 4,
   **dadurch gekennzeichnet, dass**
   das Sichtglas (403.1, 403.2) Drücken von mindestens 10 bar standhält.

6. Sensorbauteil nach einem der Ansprüche 1 bis 5,
   **dadurch gekennzeichnet, dass**
   das Sensorbauteil als rohrförmiger Körper mit einem Querschnitt, bevorzugt einem kreisrunden Querschnitt $Q_3$ ausgebildet ist.

7. Sensorbauteil nach Anspruch 6,
   **dadurch gekennzeichnet, dass**
   der Querschnitt $Q_1$ des Sensorbauteiles im Sensorabschnitt (5) geringer ist als der Querschnitt $Q_3$ im Bauteilabschnitt (11.1, 11.2).

8. Sensorbauteil nach einem der Ansprüche 1 bis 7,

   **dadurch gekennzeichnet, dass**
   das Aufnahmebauteil ein bevorzugt ringförmiges, dickwandiges Aufnahmebauteil (420.1, 420.2, 420) ist, wobei für den Außendurchmesser AD des ringförmigen Aufnahmebauteiles gilt:

   $AD > 1,3 \cdot ID$, bevorzugt
   $AD > 1,4 \cdot ID$, insbesondere
   $AD > 1.5 \cdot ID$,

   wobei ID der Innendurchmesser des Aufnahmebauteiles ist, der mit dem Durchmesser der Aufnahmeöffnung (422, 522) übereinstimmt.

9. Sensorbauteil nach einem der Ansprüche 1 bis 8,
   **dadurch gekennzeichnet, dass**
   die Größe der Aufnahmeöffnung (22), insbesondere der Durchmesser der Aufnahmeöffnung (22) derart gewählt wird, dass die optischen Anforderungen an das Sichtglas, insbesondere in Bezug auf den Strahldurchmesser des durchtretenden Lichtstrahls weitgehend erfüllt werden.

10. Optischer Durchflusssensor mit wenigstens einem optischen Sensor,
    **dadurch gekennzeichnet, dass**
    der optische Durchflusssensor ein Sensorbauteil gemäß einem der Ansprüche 1 bis 9 umfasst.

11. Optischer Durchflusssensor gemäß Anspruch 10,
    **dadurch gekennzeichnet, dass**
    der optische Durchflusssensor eine Lichtquelle, insbesondere eine Leuchtdiode, insbesondere ein Leuchtdiodenarray umfasst.

12. Optischer Durchflusssensor gemäß Anspruch 11,
    **dadurch gekennzeichnet, dass**
    die Lichtquelle, insbesondere die Leuchtdiode, bevorzugt das Leuchtdiodenarray Licht mit einer Wellenlänge im Infraroten, insbesondere im Wellenlängenbereich 1 μm bis 2 μm abstrahlt.

13. Vorrichtung zur Aufnahme und/oder Leitung eines flüssigen oder gasförmigen Mediums,
    **dadurch gekennzeichnet, dass**
    die Vorrichtung wenigstens einen optischen Durchflusssensor (1) gemäß einem der Ansprüche 10 bis 12 aufweist.

14. Vorrichtung nach Anspruch 13,
    **dadurch gekennzeichnet, dass**
    das flüssige oder gasförmige Medium eines der nachfolgenden Medien ist: Erdgas, Wasserstoff, Stickstoff, Sauerstoff, Abgase von Verbrennungsmotoren, industrielle Prozessgase, Autogas, Luft, Wasser, insbesondere Salzwasser, Öle, insbesondere für Motoren, Getriebe- und Hydraulikanwendungen, Alkohole, insbesondere Methanol und Ethanol, Benzin und Dieselkraftstoff, Rapsöl, Methylesther, Flugzeugturbinentreibstoffe, Harnstoffe und Harnstofflösungen, Flurkohlenwasserstoffe.

15. Vorrichtung nach einem der Ansprüche 13 bis 14, **dadurch gekennzeichnet, dass** die Vorrichtung Leitungsteile (7.1, 7.2, 407.1, 407.2) umfasst, die mit dem Sensorbauteil bevorzugt den Bauteilschnitten, insbesondere stoffschlüssig bevorzugt durch Löten, Hartlöten oder Schweißen verbunden sind.

16. Vorrichtung nach Anspruch 15, **dadurch gekennzeichnet, dass** die Leitungsteile (7.1, 7.2, 407.1, 407.2) einen Querschnitt $Q_2$ aufweisen und der Querschnitt $Q_2$ im Wesentlichen dem Querschnitt $Q_1$ des Sensorbauteiles im Sensorabschnitt entspricht.

17. Verfahren zur Herstellung eines Sensorbauteiles für einen optischen Durchflusssensor für fluide und/oder gasförmige Medien insbesondere nach einem der Ansprüche 1 bis 9 mit folgenden Schritten:

- zur Verfügung stellen eines Sensorabschnittes mit wenigstens einer Aussparung (450.1, 450.2)
- zur Verfügung stellen eines Aufnahmebauteiles mit einer Aufnahmeöffnung (422)
- Einbringen eines Sichtglases (403, 403.1, 403.2) in die wenigstens eine Aufnahmeöffnung (422) des Aufnahmebauteiles
- Erwärmen von Sichtglas und Aufnahmebauteil derart, dass das Sichtglas aufschmilzt und in Form eines Druckglases in die wenigstens eine Aufnahmeöffnung (422) eingeglast wird
- Einbringen und Verbinden, insbesondere durch Hartlöten, des Aufnahmebauteiles in die Aussparung (450.1, 450.2) des Sensorabschnittes.

18. Verfahren zur Herstellung eines Sensorbauteiles für einen optischen Durchflusssensor für fluide und/oder gasförmige Medien insbesondere nach einem der Ansprüche 1 bis 9 mit folgenden Schritten:

- zur Verfügung stellen eines Sensorabschnittes mit wenigstens einer Aussparung (450.1, 450.2)
- zur Verfügung stellen eines Aufnahmebauteiles mit einer Aufnahmeöffnung (522)
- Einbringen eines Glaslotes (500) und eines Sichtglases (503) in die wenigstens eine Aufnahmeöffnung (522)
- Erwärmen von (Glaslot (500), Sichtglas (503) und Aufnahmebauteil derart, dass das Sichtglas (503) mit dem Glaslot (500) in der Aufnahmeöffnung (522) verschmilzt in Form eines Druckglases
- Einbringen und Verbinden, insbesondere durch Hartlöten, Laserschweißen oder Löten des Aufnahmebauteiles in die Aussparung (450.1, 450.2) des Sensorabschnittes.

**Claims**

1. A sensor component (1) for an optical flow rate sensor for fluid and/or gaseous media, comprising at least one component segment (11.1, 11.2) and at least one sensor segment (5), wherein

- the sensor segment (5) comprises at least two inspection windows (3.1, 3.2; 403.1, 403.2) in the region of multiple cutouts (50.1, 50.2; 450.1, 450.2) in the sensor segment (5), which are arranged in such a way that light is allowed to pass through a cross-section ($Q_1$) of the sensor segment (5), or
- the sensor segment (5) comprises precisely one inspection window (3.1) in the region of a cutout, and a reflective surface, especially a mirrored or polished surface, is provided on the side opposite the cutout, such that light is allowed to pass twice through a cross-section ($Q_1$) of the sensor segment, wherein
- the sensor component comprises a receiving component that can be introduced into the one or multiple cutouts (50.1, 50.2; 450.1, 450.2), **characterized in that**
- the inspection window or the inspection windows (3.1, 3.2, 403, 403.1, 403.2, 503) is or are materially connected to the receiving component in form of a compression glass-to-metal sealing.

2. A sensor component according to claim 1, **characterized in that** the inspection window (403) is sealed directly into a receiving opening (422) of the receiving component.

3. A sensor component according to claim 1, **characterized in that** the inspection window (503) is sealed in a receiving opening (522) of the receiving component by means of a solder glass.

4. A sensor component according to one of the claims 1 to 3, **characterized in that** the inspection window (3.1, 3.2, 403, 403.1, 403.2, 503) is a borosilicate glass, an alkali silicate glass or a sapphire glass.

5. A sensor component according to one of the claims 1 to 4, **characterized in that** the inspection window (403.1, 403.2) withstands the pressures of at least 10 bar.

6. A sensor component according to one of the claims 1 to 5, **characterized in that** the sensor component is formed as a tubular body with a cross-section, preferably a circular cross-section $Q_3$.

7. A sensor component according to claim 6, **characterized in that** the cross-section $Q_1$ of the sensor component in the sensor segment (5) is smaller than the cross-section $Q_3$ in the component segment (11.1, 11.2).

8. A sensor component according to one of the claims 1 to 7, **characterized in that** the receiving component is preferably an annular, thick-walled receiving component (420.1, 420.2, 420), wherein the following applies to the outside diameter AD of the annular receiving component:

$$AD > 1.3 \cdot ID,$$

preferably

$$AD > 1.4 \cdot ID,$$

especially

$$AD > 1.5 \cdot ID,$$

wherein ID is the inner diameter of the receiving component which matches the diameter of the receiving opening (422, 522).

9. A sensor component according to one of the claims 1 to 8, **characterized in that** the size of the receiving opening (22), especially the diameter of the receiving opening (22), is selected in such a way that the optical requirements on the inspection window, especially with respect to the beam diameter of the passing light beam, are fulfilled substantially.

10. An optical flow rate sensor having at least one optical sensor, **characterized in that** the optical flow rate sensor comprises a sensor component according to one of the claims 1 to 9.

11. An optical flow rate sensor according to claim 10, **characterized in that** the optical flow rate sensor comprises a light source, especially a light-emitting diode, in particular a light-emitting diode array.

12. An optical flow rate sensor according to claim 11, **characterized in that** the light source, especially the light-emitting diode, preferably the light-emitting diode array, emits light with a wavelength in the infrared, especially in the wavelength range of 1 $\mu$m to 2 $\mu$m.

13. An apparatus for receiving and/or conducting a liquid or gaseous medium, **characterized in that** the apparatus comprises at least one optical flow rate sensor (1) according to one of the claims 10 to 12.

14. An apparatus according to claim 13, **characterized in that** the liquid or gaseous medium is one of the following media:

   natural gas, hydrogen, nitrogen, oxygen, exhaust gases of internal combustion engines, industrial process gases, liquefied petroleum gas, air, water, especially salt water, oils, especially for engines, transmission and hydraulic applications, alcohols, especially methanol and ethanol, petrol and diesel fuel, rapeseed oil, methyl ester, aircraft turbine fuels, urea and urea solutions, fluorinated hydrocarbons.

15. An apparatus according to one of the claims 13 to 14, **characterized in that** the apparatus comprises line parts (7.1, 7.2, 407.1, 407.2) which are connected to the sensor component, preferably the component segments, especially in a materially bonded manner, preferably by soldering, brazing or welding.

16. An apparatus according to claim 15, **characterized in that** the line parts (7.1, 7.2, 407.1, 407.2) have a cross-section $Q_2$ and the cross-section $Q_2$ substantially matches the cross-section $Q_1$ of the sensor component in the sensor segment.

17. A method for producing a sensor component for an optical flow rate sensor for fluid and/or gaseous media, especially according to one of the claims 1 to 9, having the following steps:

   - providing a sensor segment with at least one cutout (450.1, 450.2);
   - providing a receiving component with a receiving opening (422);
   - introducing an inspection window (403, 403.1, 403.2) into the at least one receiving opening (422) of the receiving component;
   - heating of the inspection window and receiving component such that the inspection window is molten and is bonded in form of a compression glass in the at least one receiving opening (422);
   - introducing and connecting, especially by brazing, the receiving component into the cutout (450.1, 450.2) of the sensor segment.

18. A method for producing a sensor component for an optical flow rate sensor for fluid and/or gaseous media, especially according to one of the claims 1 to 9, having the following steps:

   - providing a sensor segment with at least one cutout (450.1, 450.2);
- providing a receiving component with a receiving opening (522);
- introducing a glass solder (500) and an inspection window (503) into the at least one receiving opening (522);
- heating of the blast solder (500), inspection window (503) and receiving component such that the inspection window (503) is fused with the glass solder (500) in the receiving opening (522) in form of a compression glass;
- introducing and connecting, especially by brazing, laser welding or soldering, the receiving component into the cutout (450.1, 450.2) of the sensor segme

**Revendications**

1. Composant de capteur (1) pour un capteur de débit pour des fluides liquides ou gazeux, comprenant au moins une partie de composant (11.1, 11.2) et au moins une partie de capteur (5), dans lequel

   - la partie de capteur (5) comprend au moins deux hublots (3.1, 3.2 ; 403.1, 403.2) au niveau de plusieurs découpes (50.1, 50.2 ; 450.1, 450.2) dans la partie de capteur (5), qui sont disposés de façon à permettre le passage de la lumière à travers une section $(Q_1)$ de la partie de capteur (5)

   ou

   - la partie de capteur (5) comprend exactement un hublot (3.1) au niveau d'une découpe et une surface réfléchissante, en particulier une surface de miroir ou une surface polie, est prévue sur le côté opposé à la découpe, de façon à permettre un double passage de la lumière à travers la section $(Q_1)$ de la partie de capteur,
   - le composant de capteur comprenant un composant de logement qui peut être inséré dans les une ou plusieurs découpes (50.1, 50.2 ; 450.1, 450.2), **caractérisé en ce que** le hublot ou les hublots (3.1, 3.2, 403, 403.1, 403.2, 503) est ou sont relié(s) par solidarité de matière au composant de logement sous la forme d'un verre pressé.

2. Composant de capteur selon la revendication 1, **caractérisé en ce que** le hublot (403) est inséré directement dans une ouverture de logement (422) du composant formant logement.

3. Composant de capteur selon la revendication 1, **caractérisé en ce que** le hublot (503) est inséré dans une ouverture de logement (522) du composant formant logement à l'aide d'un verre de scellement.

4. Composant de capteur selon l'une des revendications 1 à 3, **caractérisé en ce que** le hublot (3.1, 3.2, 403, 403.1, 403.2, 503) est un verre borosilicate, un verre au silicate alcalin ou un verre saphir.

5. Composant de capteur selon l'une des revendications 1 à 4, **caractérisé en ce que** le hublot (403.1, 403.2) résiste à des pressions d'au moins 10 bars.

6. Composant de capteur selon l'une des revendications 1 à 5, **caractérisé en ce qu'**il est conformé comme un corps tubulaire ayant une section, de préférence une section circulaire $Q_3$.

7. Composant de capteur selon la revendication 6, **caractérisé en ce que** la section $Q_1$ du composant de capteur est plus petite dans la partie de capteur (5) que la section $Q_3$ dans la partie de composant (11.1, 11.2).

8. Composant de capteur selon l'une des revendications 1 à 7, **caractérisé en ce que** le composant de logement est de préférence un composant de logement (420.1, 420.2, 420) annulaire à paroi épaisse, dont le diamètre extérieur AD répond aux relations :

$$AD > 1,3 \times ID,$$

de préférence

$$AD > 1,4 \times ID,$$

en particulier

$$AD > 1,5 \times ID,$$

où ID est le diamètre intérieur du composant formant logement qui coïncide avec le diamètre de l'ouverture de logement (422, 522).

9. Composant de capteur selon l'une des revendications 1 à 8, **caractérisé en ce que** la taille de l'ouverture de logement (22), en particulier le diamètre de l'ouverture de logement (22), est choisie de manière à satisfaire dans une grande mesure les exigences concernant le hublot, en particulier en ce qui concerne le diamètre du faisceau lumineux qui le traverse.

10. Capteur de débit optique avec au moins un capteur optique, **caractérisé en ce que** le capteur de débit optique est un composant de capteur selon l'une des revendications 1 à 9.

**11.** Capteur de débit optique selon la revendication 10, **caractérisé en ce que** le capteur de débit optique comprend une source lumineuse, en particulier une diode électroluminescente, en particulier une matrice de diodes électroluminescentes.

**12.** Capteur de débit optique selon la revendication 11, **caractérisé en ce que** la source lumineuse, en particulier la diode électroluminescente, de préférence la matrice de diodes électroluminescentes, émet de la lumière dans le domaine infrarouge, en particulier dans la plage de longueurs d'ondes de 1 $\mu$m à 2 $\mu$m.

**13.** Dispositif pour recevoir et/ou guider un fluide liquide ou gazeux, **caractérisé en ce qu'**il comporte au moins un capteur de débit optique (1) selon l'une des revendications 10 à 12.

**14.** Dispositif selon la revendication 13, **caractérisé en ce que** le fluide liquide ou gazeux est l'un des fluides suivants : gaz naturel, hydrogène, azote, oxygène, gaz d'échappement de moteurs à combustion interne, gaz de process industriels, GPL, air, eau, en particulier eau salée, huiles, en particulier pour moteurs, engrenages et applications hydrauliques, en particulier méthanol et éthanol, essence et gas-oil, huile de colza, ester de méthyle, carburants pour avions à réaction, urées et solutions d'urée, hydrocarbures fluorés.

**15.** Dispositif selon l'une des revendications 13 à 14, **caractérisé en ce qu'**il comprend des parties de conduite (7.1, 7.2, 407.1, 407.2) qui sont reliées au composant de capteur et de préférence aux interfaces du composant, en particulier par solidarité de matière par brasage, brasage dur ou soudage.

**16.** Dispositif selon la revendication 15, **caractérisé en ce que** les parties de conduite (7.1, 7.2, 407.1, 407.2) présentent une section $Q_2$ et la section $Q_2$ correspond pour l'essentiel à la section $Q_1$ du composant de capteur dans la partie de capteur.

**17.** Procédé pour la fabrication d'un composant de capteur pour un capteur de débit optique pour des fluides liquides et/ou gazeux, en particulier selon l'une des revendications 1 à 9, comprenant les étapes suivantes :

    - mise à disposition d'une partie de capteur avec au moins une découpe (450.1, 450.2) ;
    - mise à disposition d'un composant de logement avec une ouverture de logement (422) ;
    - insertion d'un hublot (403, 403.1, 403.2) dans l'au moins une ouverture de logement (422) du composant de logement ;
    - chauffage du hublot et du composant de logement de façon à ce que le hublot fonde et s'intègre sous la forme d'un verre pressé dans l'au moins une ouverture de logement (422) ;
    - insertion et liaison, de préférence par brasage dur, soudage au laser ou brasage, du composant de logement dans la découpe (450.1, 450.2) de la partie de capteur.

**18.** Procédé pour la fabrication d'un composant de capteur pour un capteur de débit optique pour des fluides liquides et/ou gazeux, en particulier selon l'une des revendications 1 à 9, comprenant les étapes suivantes :

    - mise à disposition d'une partie de capteur avec au moins une découpe (450.1, 450.2) ;
    - mise à disposition d'un composant de logement avec une ouverture de logement (522) ;
    - insertion d'un verre de brasage (500) et d'un hublot (503) dans l'au moins une ouverture de logement (522) ;
    - chauffage du verre de brasage (500), du hublot (503) et du composant de logement de telle manière que le hublot (503) fusionne avec le verre de brasage (500) dans l'ouverture de logement (522) sous la forme d'un verre pressé ;
    - insertion et liaison, de préférence par brasage dur, soudage au laser ou brasage, du composant de logement dans la découpe (450.1, 450.2) de la partie de capteur.

Fig. 1

Fig. 2

Metallisiert

AuSn gelötet
(SOLDERED)

22

10

max

1

20

3.1

Fig. 3

AD

ID

geschweisst

3.2

50.2

Saphirglas

A

DS

Q1

5

gelötet mit

50.1

AgSn Lot

3.1

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008058071 A1
- DE 102007025585 A1
- US 20050286054 A1
- DE 4241098 A1
- US 6023324 A
- EP 0967466 A1
- US 7030629 B1
- US 20070056365 A1
- US 3800147 A
- US 5151474 A
- US 5046854 A
- US 3555450 A
- DE 10355425 A
- US 6731385 B